# EUROPÄISCHE PATENTSCHRIFT

(11) **EP 0 790 888 B1**
(45) Veröffentlichungstag und Bekanntmachung des Hinweises auf die Patenterteilung: **09.06.1999**
(21) Anmeldenummer: 95938409.0
(22) Anmeldetag: 04.11.1995
(51) Int. Cl.: B29C 65/08

(54) **VORRICHTUNG UND VERFAHREN ZUM FORTLAUFENDEN ULTRASCHALLBEARBEITEN EINER MATERIALBAHN**
CONTINUOUS ULTRASOUND MACHINING PROCESS AND DEVICE FOR WEBS OF MATERIAL
PROCEDE ET DISPOSITIF D'USINAGE EN CONTINU PAR ULTRASONS D'UNE BANDE DE MATERIAU

(30) Priorität: 07.11.1994 DE 4439284; 07.04.1995 DE 19513246; 19.07.1995 DE 19526354
(43) Veröffentlichungstag der Anmeldung: 27.08.1997
(73) Patentinhaber: Herrmann Ultraschalltechnik GmbH & Co. KG, 76307 Karlsbad-Ittersbach (DE)
(72) Erfinder: HERRMANN, Walter, D-76307 Karlsbad (DE); WITTMAIER, Klaus, D-71665 Vaihingen (DE)
(74) Vertreter: Dreiss, Fuhlendorf, Steimle & Becker, Patentanwälte
(86) Internationale Anmeldenummer: EP9504336
(87) Internationale Veröffentlichungsnummer: WO9614202

(56) Entgegenhaltungen:
- WO-A-92/13652
- WO-A-96/00881
- DE-A- 1 946 444
- DE-C- 4 317 621
- FR-A- 1 314 142
- FR-A- 2 635 288
- GB-A- 952 581
- GB-A- 2 279 034
- GB-A- 2 283 700
- SU-A- 1 519 915
- US-A- 3 445 307
- US-A- 3 826 701
- US-A- 3 917 146
- US-A- 4 313 778
- US-A- 4 373 982
- DEUTSCHER DRUCKER, Bd. 31, 21.September 1995, OSTFILDERN DE, Seite 29 XP000533483 SCHOBER GMBH WERKZEUG- UND MASCHINENBAU: "Schneiden, Schweissen und Siegeln mittels Ultraschall - berührungslos und verschleissfrei"
- PATENT ABSTRACTS OF JAPAN vol. 014, no. 370 (C-0747), 10.August 1990 & JP,A,02 134188 (BROTHER IND LTD), 23.Mai 1990,
- PATENT ABSTRACTS OF JAPAN vol. 013, no. 154 (M-814), 14.April 1989 & JP,A,63 315223 (HITACHI CONSTR MACH CO LTD), 22.Dezember 1988,
- PATENT ABSTRACTS OF JAPAN vol. 008, no. 021 (E-224), 28.Januar 1984 & JP,A,58 184734 (TOKYO SHIBAURA DENKI KK), 28.Oktober 1983,

## Beschreibung

Die Erfindung betrifft eine Vorrichtung und Verfahren zum fortlaufenden Ultraschallbearbeiten einer Materialbahn gemäß der Oberbegriffe der Ansprüche 1 und 19.

Zusätzlich zu Rotationsstanz- und -schneidwalzen, mit denen endlose Materialbahnen bearbeitet werden, werden in zunehmendem Maße Ultraschall-Sonotroden verwendet, mit denen die Materialbahnen geschnitten, perforiert, gestanzt, geprägt, wärmebehandelt oder auf ähnliche Weise bearbeitet werden (DE 41 05 013 A1, DE 37 34 855 A1).

Vorrichtungen zum fortlaufenden Ultraschallbearbeiten einer Materialbahn sind hinreichend bekannt. Bei diesen Vorrichtungen weist die Ultraschallschwingeinheit in der Regel einen Konverter auf, an dem direkt oder indirekt eine Sonotrode angeordnet ist. Es kann also zwischen dem Konverter und der Sonotrode ein Amplitudentransformationsstück, auch Booster genannt, vorgesehen sein. Bei derartigen Ultraschallschwingeinheiten ist entweder das Schwingmodul in seinem Konvertergehäuse oder das Amplitudentransformationsstück über einen Haltering in einer Aufnahme gelagert. Diese Lagerungen befinden sich stets in den Schwingungsknoten. In der Regel fallen jedoch die rechnerisch ermittelten Knoten und die Orte der Lagerung auseinander. Um zu verhindern, daß die Schwingbewegungen von der Ultraschallschwingeinheit ungedämpft in den Maschinenständer übertragen werden, ist die Ultraschallschwingeinheit weich, d.h. federnd gelagert. Dies erfolgt in der Regel über gummielastische Elemente, z.B. O-Ringe, zwischen denen das eingespannte Element der Ultraschallschwingeinheit aufgenommen ist.

Zur Einstellung einer optimalen Schweiß- und/oder Schneidspalthöhe zwischen der Sonotrode und dem Gegenwerkzeug wird die Ultrschallschwingeinheit z.B. mittels eines pneumatischen Antriebs gegen einen Anschlag gefahren und auf diese Weise bezüglich des Gegenwerkzeugs positioniert. Wird nun eine Materialbahn durch den Schweiß- oder Schneidspalt geführt, dann wirkt sowohl durch die Materialbahn als auch durch die Schweißkraft eine Reaktionskraft auf die Sonotrode. Insbesondere bei hohen und/oder veränderlichen Schweißkräften, hohen Bahngeschwindigkeiten und bei sich verändernder Dicke der Bahn führt diese Reaktionskraft dazu, daß die Sonotrode der Materialbahn ausweicht, d.h. sich vom Gegenwerkzeug entfernt. Dies ist einerseits bedingt durch die weiche Lagerung, andererseits durch den Pneumatikantrieb, der dann nachgibt, wenn die Reationskraft größer ist als die Zustellkraft. Um diesem Ausweichvorgang entgegenzuwirken wird die Zustellkraft des Pneumatikantriebs weiter erhöht. Je nach Betriebszustand besitzt also eine derartige Vorrichtung unterschiedliche minimale und maximale Spalthöhen. Dies führt zu nicht konstanten Schweiß- und Schneidergebnissen. Außerdem ist die Rückstellkraft und damit die Rückstellbewegung während des Betriebs so groß, daß die Lage der Ultraschallschwingeinheit zum Gegenwerkzeug bei Stillstand so gewählt werden muß, daß die Sonotrode das Gegenwerkzeug berührt. Dies führt beim An- und Abfahren der Anlage zu einem hohen Verschleiß an der Sonotrode. Ein hoher Verschleiß an der Sonotrode tritt außerdem auch dann ein, wenn sich während des Betriebs keine Materialbahn zwischen der Sonotrode und dem Gegenwerkzeug befindet.

Ein weiterer erheblicher Nachteil dieser bekannten Vorrichtung liegt darin, daß bei einer unterschiedlichen Anzahl von Lagen unterschiedliche Anschlagpositionen notwendig sind und somit die Vorrichtung je nach Anwendung neu einzurichten ist.

Aus der FR-A-1,314,142 ist eine Ultraschallschweißvorrichtung mit einer Ultraschallschwingeinheit und einem Gegenwerkzeug bekannt geworden. Die Ultraschallschwingeinheit ist in einem Gehäuse gelagert, wofür Gummilagerungen verwendet werden. Die Aufgabe dieser Gummilagerungen ist, die von der Ultraschallschwingeinheit ausgehenden Vibrationen in Richtung auf das Gehäuse zu dämpfen. Eine derartige Lagerung hat zwar den Vorteil, dass ein Teil der Ultraschallschwingungen, die von der Ultraschallschwingeinheit auf das Gehäuse übertragen werden, absorbiert werden. Jedoch wird mit einer derartigen elastischen Lagerung der Nachteil in Kauf genommen, dass die Sonotrode der Ultraschallschwingeinheit bezüglich dem Gegenwerkzeug nicht starr ist, sondern dem Werkzeug ausweichen kann.

Die GB-A-952,581 offenbart ebenfalls eine Vorrichtung, bei der die Ultraschallschwingeinheit über eine Feder mit dem Maschinenständer verbunden ist. Zwar kann die Ultraschallschwingeinheit nicht nach oben ausweichen, da eine Stellschraube den Weg begrenzt, jedoch besteht die Möglichkeit, dass durch Resonanzschwingungen das System aufgrund der elastischen Lagerung derart in Schwingung gerät.

Die US-A-4,373,982 offenbart eine Vorrichtung, bei der die Ultraschallschwingeinheit zum Einstellen des Anstellwinkels schwenkbar um einen Schwenkstift gelagert ist. Nach Überwindung der Kraft der Feder kann also die Ultraschallschwingeinheit ausweichen.

Die DE-A-1,946,444 offenbart eine Vorrichtung, bei der die Ultraschallschwingeinheit vertikal gelagert ist und mit ihrem Eigengewicht auf dem Werkstück aufliegt.

Die DE-C-43 17 621 offenbart eine Sonotrode, die mit einem bestimmten Anpressdruck auf das Werkstück aufgepresst wird. Diese Vorrichtung ist also druckgesteuert bzw. kraftgesteuert.

Die US-A-3,917,146 offenbart eine Ultraschallschweißeinrichtung, bei der der Amboss elastisch mittels einer Blattfeder gelagert ist.

Entscheidend ist also bei den Sonotroden, daß der Spalt zwischen der Spitze des Bearbeitungswerkzeugs und dem Gegenwerkzeug eine konstante Höhe aufweist. Durch diesen Spalt wird die zu bearbeitende Materialbahn, die auch aus mehreren Schichten bestehen kann, hindurchgeführt.

Ausgehend von der US-A-4,373,982 liegt der Erfindung deshalb die Aufgabe zugrunde, ein Verfahren und eine Vorrichtung bereitzustellen, mit der es möglich ist, mit einem geringen Verschleiß ein reproduzierbar gutes Schweiß- und/oder Schneidergebnis zu erreichen, und mit derselben Maschineneinstellung bei unterschiedlicher Lagenzahl der Materialbahn auszukommen.

Die Aufgabe wird erfindungsgemäß durch die Merkmale der Ansprüche 1 und 19 gelöst.

Durch die nach dem Einstellvorgang starre Positionierung der Ultraschallschwingeinheit bzgl. des Gegenwerkzeugs wird sichergestellt, daß der Schweiß- und/oder Schneidspalt eine konstante Größe aufweist und dadurch vermieden wird, daß die Sonotrode auf dem Gegenwerkzeug aufläuft. Ein konstanter Schneidspalt gewährleistet auch ein reproduzierbares Schweiß- und/oder Schneidergebnis. Bei unterschiedlicher Lagenzahl der Materialbahn wird ein gleichbleibendes Schweiß- und Schneidergebnis dadurch erzielt, daß das Material im Bereich von Vertiefungen im Gegenwerkzeug in diese ausweichen kann und die Leistungsabgabe an die Materialbahn durch einen Ultraschallgenerator geregelt wird. Wird eine derartige Vorrichtung an- bzw. abgefahren, dann besteht keine Gefahr, daß die Sonotrode das Gegenwerkzeug berührt, da aufgrund der starren Lagerung und der dadurch bedingten konstanten Spalthöhe der Schweiß- und Schneidspalt mit Sicherheit vorgegeben ist. Während des Betriebs werden die Reaktionskräfte von der starren Lagerung und der dadurch bedingten konstanten Spalthöhe abgestützt.

Vor und/oder während des Bearbeitungsvorgangs ist der Spalt zwischen der Sonotrode und dem Gegenwerkzeug einstellbar. Hierfür ist die Verstelleinrichtung vorgesehen, über die die Zustellbewegung der Sonotrode erfolgt und mit der der Schweißspalt exakt einstellbar ist. Diese Verstellvorrichtung wird nach dem Einstellvorgang starr mit dem Maschinenständer verbunden.

Bei einer Ausführungsform ist der Konverter starr von einem Konvertergehäuse aufgenommen, wobei das Konvertergehäuse über die Verstelleinrichtung starr am Maschinenständer gehaltert ist. Eine andere Ausführungsform sieht vor, daß die Sonotrode über die Verstelleinrichtung starr direkt oder indirekt am Maschinenständer befestigt ist. Bei einem weiteren Ausführungsbeispiel ist das Amplitudentransformationsstück über die Verstelleinrichtung starr am Maschinenständer angeordnet. Diese Ausführungsformen haben gemeinsam, daß ein Bauteil der Ultraschallschwingeinheit über die Verstelleinrichtung starr mit dem Maschinenständer verbunden ist. Diese Befestigung befindet sich bevorzugt am Ort eines Schwingungsknotens. Andere Orte sind jedoch ebenfalls denkbar.

Aufgrund der bei der Bearbeitung entstehenden Wärme ändert sich die Länge des Bearbeitungswerkzeugs, zum Beispiel der Sonotrode, was zu einer Änderung der Spalthöhe führen kann. Ein zu enger Spalt führt jedoch in der Regel zu einer Verschlechterung der Materialbearbeitung und kann unter Umständen in einer Beschädigung der Materialbahn oder der Werkzeuge resultieren. Ein zu weiter Spalt ergibt eine nicht akzeptable Siegelqualität. Es wird daher angestrebt, den Spalt möglichst konstant zu halten. Unter Umständen wird ein zu großer Spalt toleriert, um Sicherheit bei einer Spaltverengung zu haben.

Bei einer Weitebildung ist vorgesehen, daß die Ultraschallschwingeinheit über eine temperaturgeführte Verstelleinrichtung starr mit dem Maschinenständer verbunden ist. Mittels dieser temperaturgeführten Verstelleinrichtung können temperaturbedingte Längenänderungen in der Ultraschallschwingeinheit oder im Gegenwerkzeug derart ausgeglichen werden, daß der Schweiß- bzw. Schneidspalt eine gleichbleibende Größe beibehält. Beispielsweise ist die Verstelleinrichtung ein Piezoaktuator. Außerdem kann die Verstelleinrichtung die Temperatur der Sonotrode, des Konverters und/oder des Amplitudentransformationsstücks als Stellgröße verwenden. Dabei ist der Verstellweg der Verstelleinrichtung so gewählt, daß dieser, abhängig von der gemessenen Temperatur, die temperaturbedingte Längenänderung des bzw. der Bauteile und dadurch die Spaltenhöhenänderung ausgleicht.

Bei einem bevorzugten Ausführungsbeispiel ist das Gegenwerkzeug eine rotierende Walze. Diese Walze kann entweder eine glatte Oberfläche aufweisen, besitzt jedoch bevorzugt die Oberfläche überragende Schneiden bzw. Schweißflächen.

Bei einem Ausführungsbeispiel ist ein die Temperatur der Sonotrode erfassender Sensor vorgesehen, wobei der Sensor mit einer Steuer- bzw. Regeleinrichtung verbunden ist und die Steuereinrichtung abhängig vom Signal des Sensors eine Änderung des Abstands der Halterung zum Gegenwerkzeug oder dessen Halterung bewirkt.

Mittels der Steuer- bzw. Regeleinrichtung kann erfindungsgemäß der Abstand des Bearbeitungswerkzeugs zum Gegenwerkzeug auf ein konstantes Maß gehalten werden. Dabei wird die Temperatur der Sonotrode gemessen und dieses Signal als Steuersignal der Steuereinrichtung zugeführt, die ihrerseits eine Veränderung des Abstands der Halterung der Sonotrode zum Gegenwerkzeug bewirkt. Nimmt die Temperatur der Sonotrode zu, was sich in einer Längenänderung der Sonotrode auswirkt, dann wird diese Längenänderung, die eine Verringerung der Spalthöhe verursachen würde, durch eine Entfernung der Halterung der Sonotrode vom Gegenwerkzeug kompensiert. Dabei entspricht der Verstellweg der Halterung exakt der Längenänderung der Sonotrode. Diese Werte werden zuvor empirisch ermittelt und in der Steuereinrichtung z.B. als Formel oder in Form einer Matrix abgespeichert. Temperaturbedingte Längenänderungen in der Sonotrode können auf diese Weise problemlos ausgeglichen werden.

Eine Weiterbildung der Vorrichtung sieht vor, daß sich der Temperatursensor im Knotenbereich oder im Bereich der Spitze der Sonotrode befindet. Dabei wird unter dem Begriff Spitze der der Materialbahn zugewandte Bereich der Sonotrode verstanden. Dieser Bereich wird mechanisch am meisten beansprucht und befindet sich außerdem zwischen dem Spalt und der Halterung der Sonotrode. Bei einem anderen Ausführungsbeispiel ist der Sensor ein Infrarot-Sensor, was den Vorteil hat, daß die Messung berührungslos durchgeführt werden kann.

Bei einer Ausführungsform ist die Steuereinrichtung, z.B. eine Steuerung für einen Piezoaktuator direkt mit der Verstelleinrichtung, z.B. dem Piezoaktuator verbunden. Dies hat den Vorteil, daß über die Verstelleinrichtung direkt die Lage der Sonotrode verstellt und dadurch eine Längenänderung kompensiert wird. Außerdem ist diese Ausführungsform mit einer geringen Anzahl an Bauteilen zu verwirklichen.

Bei einem weiteren Ausführungsbeispiel ist vorgesehen, daß ein die Spalthöhe zwischen der Sonotrode und dem Gegenwerkzeug erfassender Sensor vorgesehen ist, daß der Sensor mit einer Steuer- oder Regeleinrichtung verbunden ist und daß die Steuer- oder Regeleinrichtung abhängig vom Signal des Sensors eine Änderung des Abstands der Halterung zum Gegenwerkzeug oder dessen Halterung bewirkt.

Mittels der Steuer- bzw. Regeleinrichtung kann erfindungsgemäß der Abstand des Bearbeitungswerkzeugs zum Gegenwerkzeug auf ein konstantes Maß gehalten werden. Dabei wird die Spalthöhe gemessen und dieses Signal als Steuersignal der Regeleinrichtung zugeführt, die ihrerseits eine Veränderung des Abstands der Halterung der Sonotrode zum Gegenwerkzeug bewirkt. Nimmt die Temperatur der Sonotrode zu, was sich in einer Längenänderung der Sonotrode auswirkt, dann wird diese Längenänderung, die eine Verringerung der Spalthöhe verursachen würde, durch eine Entfernung der Halterung der Sonotrode vom Gegenwerkzeug kompensiert. Dabei entspricht der Verstellweg der Halterung exakt der Längenänderung der Sonotrode. Temperaturbedingte Längenänderungen in der Sonotrode können auf diese Weise problemlos ausgeglichen werden. Dabei kann ein Wirbelstromsensor im Gegenwerkzeug vorgesehen sein, so daß zusätzlich zur Längenausdehnung der Sonotrode noch die Wärmeausdehnung des Gegenwerkzeuges, was gleichfalls eine Spaltveränderung zur Folge hat, von der Regeleinrichtung erfaßt und kompensiert werden kann und auch diese Messung berührungslos durchgeführt werden kann.

Bei einem anderen Ausführungsbeispiel ist die Verstelleinrichtung ein Piezoaktuator, mit dem der Abstand zwischen der Halterung für die Sonotrode und dem Gegenwerkzeug verstellt wird. Dieser Piezoaktuator wird über eine Steuereinrichtung angesteuert und kompensiert somit direkt die Längenänderung der Sonotrode.

Bei einem weiteren Ausführungsbeispiel ist vorgesehen, daß die Sonotrode und das Gegenwerkzeug voneinander elektrisch getrennt sind. Bei diesem Ausführungsbeispiel kann nun die Sonotrode mittels der Verstellvorrichtung in Richtung auf das Gegenwerkzeug verstellt werden, und zwar so lange, bis die Sonotrodenspitze das Gegenwerkzeug berührt. In diesem Augenblick kann mittels einer Meßeinrichtung ein elektrischer Wert ermittelt werden. Dieser elektrische Wert kann ein Widerstand, ein Strom oder eine Spannung sein. Erfaßt der Sensor die Widerstandsänderung, den Stromfluß oder den Spannungsabfall, bedeutet dies, daß die Sonotrodenspitze das Gegenwerkzeug berührt oder so weit vom Gegenwerkzeug entfernt ist, daß bereits ein Signal erfaßt werden kann. Im gleichen Augenblick wird die Zustellbewegung der Sonotrode angehalten und die Sonotrode wird von dieser Position ausgehend um eine vorgegebene Wegstrecke, die der Spalthöhe H entspricht vom Gegenwerkzeug wegbewegt bzw. angehoben. Auf diese Weise wird sichergestellt, daß die Spalthöhe den exakt definierten Wert besitzt. Da sich aber im Laufe der Bearbeitung der Materialbahn die Spalthöhe H durch Verschleiß und/oder Temperaturänderungen der einzelnen Bauteile verändert, wird in vorgegebenen Zeitintervallen der oben beschriebene Einstellvorgang wiederholt. Dabei kann auch festgestellt werden, wie sich die Spalthöhe H verändert hat. Aufgrund der Veränderungen können Rückschlüsse auf den Verschleißzustand der Werkzeuge gezogen werden.

Die Zeitintervalle, in denen die Spalthöhe H neu eingestellt wird, können fest vorgegeben sein. Sie können aber auch variieren, wobei die Länge des Zeitintervalls davon abhängen kann, inwieweit sich die Spalthöhe beim vorausgehenden Einstellvorgang verändert hat. Bei geringen Spalthöhenänderungen, die einen geringen Ausgleich zur Folge haben, kann das nachfolgende Zeitintervall groß gewählt werden. Ändert sich die Spalthöhe H jedoch stark, so kann dies zu einer Verkürzung des Zeitintervalls führen. Die Werte des Sensors sowie die vorgegebenen Werte für die Spalthöhe, Zeitintervalle usw. können in einer speicherprogrammierbaren Steuerung (SPS) eingegeben bzw. abgelegt werden. Durch Zwischenschaltung eines A/D-Wandlers zwischen den Sensor und der SPS können die Werte des Sensors direkt in die Steuerung eingegeben werden.

Bei einer Weiterbildung ist vorgesehen, daß die Verstelleinheit sowohl an der Ultraschallschwingeinheit als auch am Maschinengestell verstellbar gelagert und arretierbar ist. Auf diese Weise kann zum einen die Ultraschallschwingeinheit bezüglich des Maschinengestells verlagert werden, zum anderen kann die Verstelleinrichtung an der Ultraschallschwingeinheit ausgerichtet werden, so daß sich diese exakt in einem Schwingungsknoten befindet.

Weitere Vorteile, Merkmale und Einzelheiten der Erfindung ergeben sich aus den Unteransprüchen und der nachfolgenden Beschreibung, in der unter Bezugnahme auf die Zeichnung ein besonders bevorzugtes Ausführungsbeispiel im einzelnen dargestellt ist. Dabei können die in der Zeichnung dargestellten sowie in den Ansprüchen und in der Beschreibung erwähnten Merkmale jeweils einzeln für sich oder in beliebiger Kombination erfindungswesentlich sein. In der Zeichnung zeigen:
- Figur 1: eine schematische Darstellung eines ersten Ausführungsbeispieles der Erfindung;
- Figur 2: eine schematische Darstellung einer Vorrichtung gemäß dem Stand der Technik;
- Figur 3: eine schematische Darstellung eines weiteren Ausführungsbeispiels der Erfindung mit temperaturgeführter Verstelleinrichtung;
- Figur 4: ein Diagramm, aus welchem die einzelnen Umwandlungsstufen des Temperatursignals erkennbar ist;
- Figur 5: ein zur Figur 3 korrespondierendes Diagramm, aus dem die Umwandlung des Temperatursignals ersichtlich ist;
- Figur 6: ein zur Figur 3 korrespondierendes Diagramm, die Umwandlung des Temperatursignals zeigend; und
- Figur 7: einen Längsschnitt durch eine weitere Ausführungsform der Erfindung.

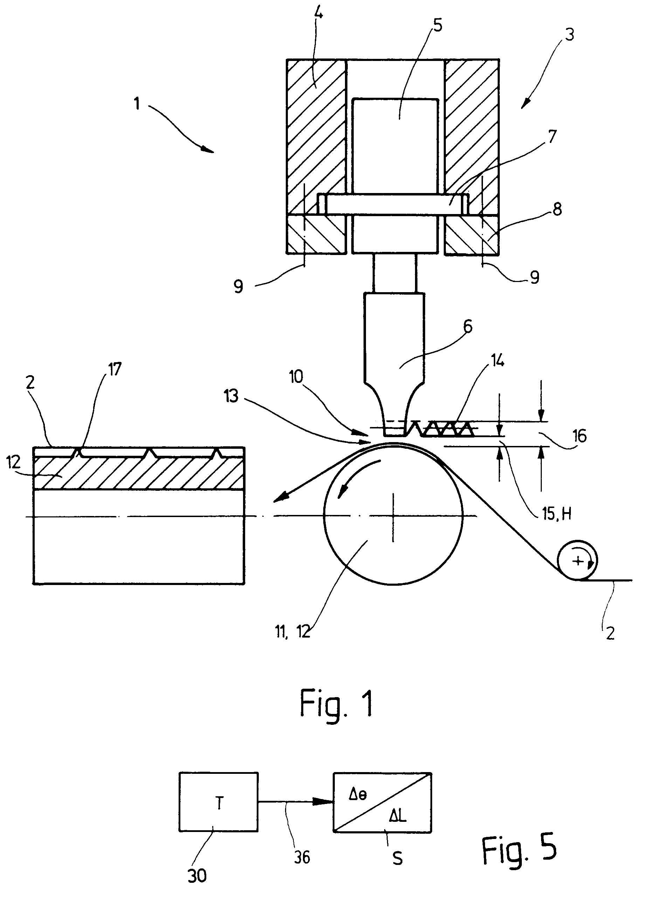

In der Figur 1 ist eine insgesamt mit 1 bezeichnete Vorrichtung zum Schweißen oder Schneiden eines bahnförmigen Materials 2 schematisch dargestellt. Diese Vorrichtung weist eine Ultraschallschwingeinheit 3 auf, die beim dargestellten Ausführungsbeispiel aus einem Schwingmodulgehäuse 4 mit einem Schwingmodul 5 sowie einer Sonotrode 6 besteht. Das Schwingmodul 5 ist mit einem Flansch 7 versehen, der in das Gehäuse 4 mittels eines Spannrings 8, der bei 9 verschraubt ist, einspannbar ist. Der Flansch 7 befindet sich am Ort eines Schwingungsknotens. Die Sonotrodenspitze 10 ist entweder eben oder an die Krümmung einer ein Gegenwerkzeug 11 bildenden Walze 12 angepaßt. Diese Sonotrodenspitze 10 und das Gegenwerkzeug 11 bilden einen Schneid-Schweiß-Spalt 13, der eine definierte Höhe H aufweist. Die Sonotrodenspitze 10 schwingt im Betrieb mit einer Amplitude 14, so daß sich eine minimale Spalthöhe 15 und eine maximale Spalthöhe 16 ergeben. Durch den Spalt 13 wird die Materialbahn 2 hindurchgeführt und mit der Sonotrode 6 bearbeitet. Dabei liegt die Materialbahn 2 auf Schneiden 17, die als Energierichtungsgeber fungieren, auf der Walze 12 auf, so daß das Material der Bahn 2 in die Zwischenräume zwischen die Schneiden 17 verdrängt werden kann. Mit der erfindungsgemäßen Vorrichtung können problemlos auch kritische Materialien, wie Nonwoven, Air-Lait, Gascophil und Tyvek bearbeitet werden. Es werden herkömmliche Verbindungsmittel, wie Leim eingespart, da die Materialien plastisch verformt werden.

Durch die konstante Spalthöhe H des Spaltes 13, die unabhängig von der Dicke der Materialbahn 2 ist und auch beim Anfahren und Abfahren der Vorrichtung 1 beibehalten wird, werden Beschädigungen der Walze 12 und der Sonotrode 6 vermieden. Selbst wenn die Materialbahn 2 mit hoher Geschwindigkeit durch den Spalt 13 bewegt wird und wenn sich die Dicke der Materialbahn 2 ändert, bleibt die Höhe H des Spaltes 13 aufgrund der fixen bzw. der starren Einspannung der Ultraschallschwingeinheit 3 über den Flansch 7 erhalten.

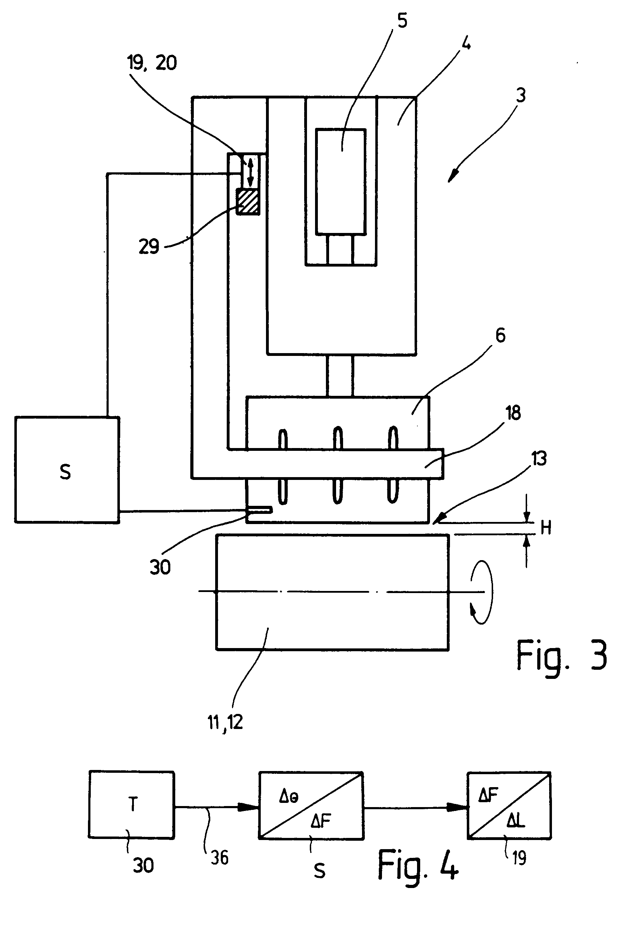

In der Figur 2 ist eine bekannte Vorrichtung 21 dargestellt, die ebenfalls eine Ultraschallschwingeinheit 23 aufweist, die aus einem Gehäuse 24 und einem piezoelektrischen Schwingmodul 25 besteht, an dem eine Sonotrode 26 befestigt ist. Es ist deutlich erkennbar, daß der Flansch 27 des piezoelektrischen Schwingmoduls 25 nicht starr im Gehäuse 24, sondern über elastische Elemente, wie O-Ringe 22 weich gelagert ist. Außerdem ist das Gehäuse 24 über eine doppeltwirkende pneumatische Kolben-Zylinder-Einheit 28 in Richtung auf die Walze 12 bis zu Anlage an einen Anschlag 29 verstellbar.

Wird bei einer solchen Vorrichtung 21 eine Materialbahn 2 mit hoher Geschwindigkeit durch den Spalt 33 hindurchgeführt, dann bewirken sowohl die Materialbahn 2 als auch die Schweißkraft mit zunehmender Geschwindigkeit eine sich vergrößernde Reaktionskraft in Richtung auf die Sonotrode 26. Aufgrund dieser Reaktionskraft wird die Sonotrode 26 und das Schwingmodul 25 im Gehäuse 24 nach oben verlagert, indem die elastische Lagerung der O-Ringe 22 verformt wird. Bei weiter zunehmender Reaktionskraft hebt schließlich das Gehäuse 24 vom Anschlag 29 ab, indem der Kolben in der Kolben-Zylinder-Einheit 28 verschoben wird. Dies ist insbesondere dann der Fall, wenn die Materialbahn 2 eine sich verändernde Dicke besitzt, z.B. unterschiedlich viele Materiallagen oder eine Quernaht aufweist.

Der Schweiß- bzw. Schneidspalt 33 ist bei dieser bekannten Ausführungsform nicht konstant. Eine derartige Vorrichtung kann in der Regel nur für eine bestimmte Materialdicke der Materialbahn 2 eingerichtet werden, wobei die Bahngeschwindigkeit der Materialbahn 2 im wesentlichen konstant sein muß. In der Ruhelage wird bei dieser Vorrichtung 21 die Sonotrode 26 so positioniert, daß sie auf der Oberfläche der Walze 12 aufliegt. Befindet sich während des Betriebs die Materialbahn 2 zwischen der Sonotrode 26 und der Walze 12, dann weist in der Regel der Walzenspalt 33 die gewünschte Höhe auf. Als problematisch wird bei dieser Vorrichtung 21 angesehen, daß beim Anfahren und Abfahren die Sonotrode 26 die Walzenoberfläche 12 und insbesondere die Schneiden 17 berührt. Dabei können sowohl die Sonotrode 26 als auch die Schneiden 17 beschädigt oder zumindest über Gebühr verschlissen werden. Lediglich während des Betriebs bei konstanten Randbedingungen besitzt eine derartige Vorrichtung 21 einen Spalt 33 mit der erforderlichen Größe. Bei sich ändernden Randbedingungen verändert sich auch der Schneidspalt 33.

Die Figur 3 zeigt eine Weiterbildung der Erfindung, in der nicht das Schwingmodul 5 im Gehäuse 4, sondern die Sonotrode 6 in einem Halter 18 starr fixiert ist. Dabei ergreift der Halter 18 die Sonotrode 6 in deren Schwingungsknoten. Dieser Halter 18 stützt sich über eine Verstelleinrichtung 19 an einem Anschlag 29 ab. Die Verstelleinrichtung 19 wird beispielsweise von einem Piezoaktuator 20 gebildet, der mit einer Steuereinheit S bzw. einer Regeleinheit verbunden ist. Diese Steuereinheit S ist außerdem mit einem Temperaturfühler 30 gekoppelt, mit dem die Temperatur der Sonotrode 6 oder die Spalthöhe H erfaßt wird.

Erhöht sich die Temperatur der Sonotrode 6 während des Betriebs, dann steuert die Steuereinheit S aufgrund dieser Temperaturänderung Δθ den Piezoaktuator 20 derart an, daß dieser den Halter 18 über eine vorgegebene Wegstrecke ΔL vom Anschlag 29 entfernt. Auf diese Weise wird die temperaturbedingte Längenänderung ΔL der Sonotrode 6 ausgeglichen, so daß der Spalt 13 nach wie vor eine konstante Größe aufweist. Neben einer Erfassung der Temperatur T der Sonotrode 6 kann auch die Temperatur T der Walze 12 erfaßt und als Steuerbefehl für den Piezoaktuator 20 verwendet werden.

Mit dieser erfindungsgemäßen Ausgestaltung kann die eingestellte Spalthöhe z.B. von 5 bis 100 µm ohne weiteres beibehalten werden, wobei Längenausdehnungen z.B. bis zu 200 µm problemlos kompensierbar sind.

Dadurch, daß bei diesem Ausführungsbeispiel nicht der Konverter sondern die Sonotrode 6 starr fixiert wird, wird die zu kompensierende Länge der Ultraschallschwingeinheit 3 erfindungsgemäß wesentlich verringert.

Aufgrund der starren Halterung und der Kompensierung der temperaturbedingten Längenänderung der Ultraschallschwingeinheit 3 sind wesentlich höhere Geschwindigkeiten der Materialbahn 2 erzielbar. Werden beim Stand der Technik die Materialbahnen 2 mit einer Geschwindigkeit von 50 m/min bewegt, so können sie bei der erfindungsgemäßen Ausgestaltung mit einer Geschwindigkeit von 500 m/min bewegt werden.

Kühlt sich die Sonotrode 6 ab, was in einer Verkürzung der Sonotrodenlänge L resultiert, wird die Temperaturänderung vom Sensor 30 erfaßt, dessen Sensorsignal 36 an die Steuereinrichtung S weitergegeben wird, die die Zustellkraft erhöht, wodurch die Verstelleinrichtung 19 um den Betrag ΔL zusammengepreßt wird, der exakt der Verkürzung der Sonotrodenlänge L entspricht (Figur 4).

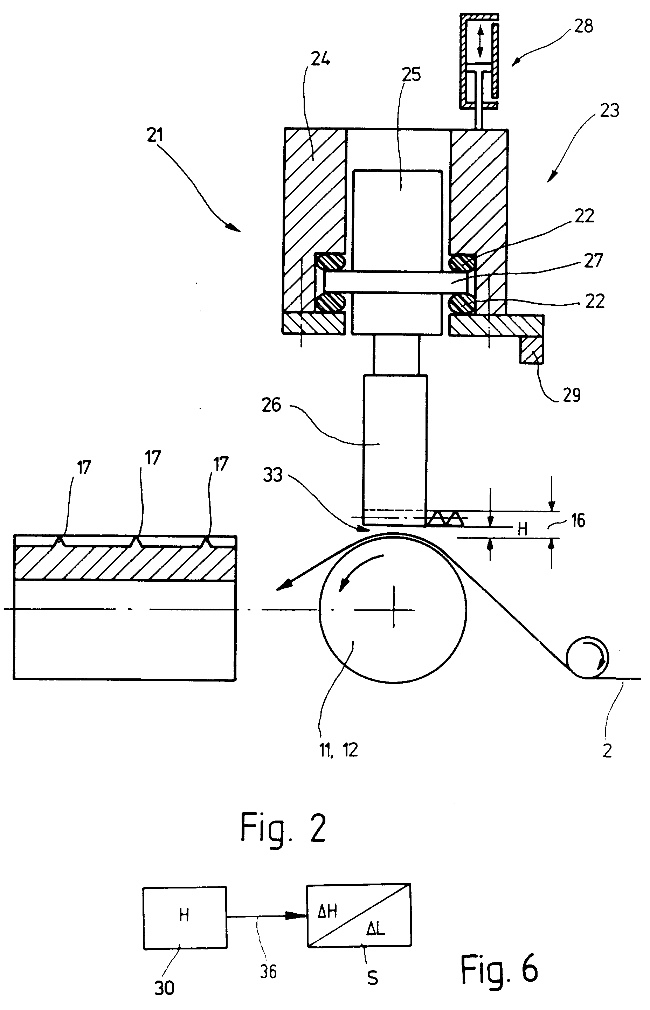

Die Funktion der Steuereinrichtung S in Verbindung mit mit dem Sensor 30, der die Temperatur T bzw. die Spalthöhe H der Sonotrodenspitze 10 erfaßt, ist in den Figuren 5 und 6 dargestellt. Aus einem Vergleich der Figuren 4 und 5, die Diagramme der Verarbeitung des Sensorssignals 36 zeigen, wird leicht erkennbar, daß das Sensorsignal 36 entweder direkt zur Längenänderung ΔL (Figur 5 und 6) oder indirekt (Figur 4) verwendet werden kann.

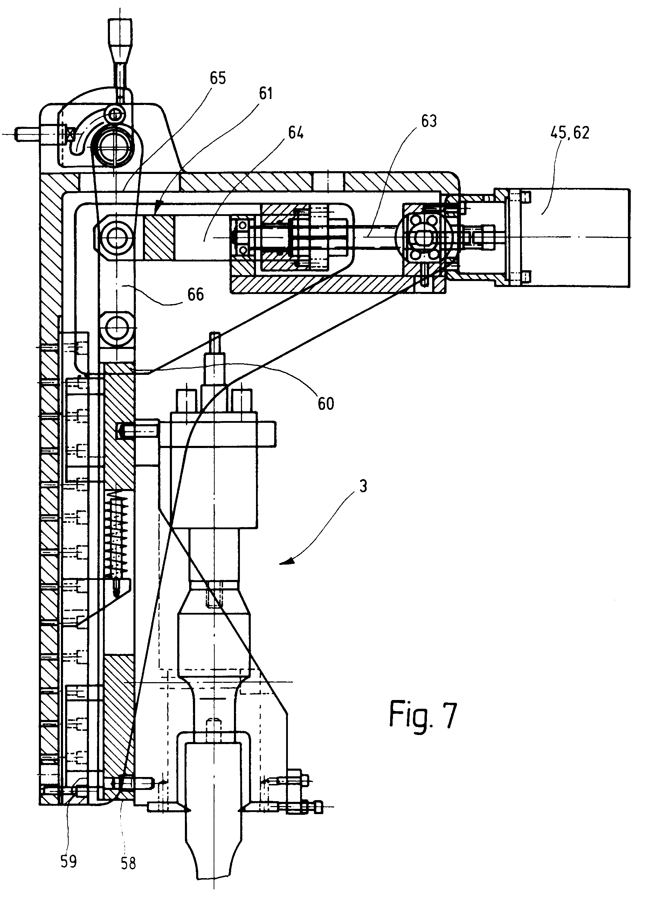

Die Figur 7 zeigt einen Längsschnitt durch eine weitere Ausführungsform der Erfindung, wobei hier die Ultraschallschwingeinheit 3 an einem Schlitten 58 befestigt ist. Dieser Schlitten 58 ist seinerseits vertikal verschieblich und spielfrei an einem insgesamt mit 59 bezeichneten Maschinenständer gelagert. Am oberen Ende 60 des Schlittens 58 greift ein Kniehebel 61 an, der über einen Antrieb 45, insbesondere einen Schrittmotor 62, angetrieben wird. Dieser Schrittmotor 62 treibt eine Spindel 63 an, die ihrerseits mit einem ersten Schenkel 64 des Kniehebels 61 verbunden ist. Dieser erste Schenkel 64 wirkt auf zwei einander im wesentlichen gegenüberliegende Schenkel 65 und 66, wobei der Schenkel 66 am oberen Ende 60 des Schlittens 58 angreift. Das freie Ende des Schenkels 65 ist am Maschinenständer 59 gelagert. Durch horizontale Verlagerung des ersten Schenkels 64 über die Spindel 63 wird der Öffnungswinkel der beiden Schenkel 65 und 66 geringfügig verstellt, wodurch der Schlitten 58 im Bereich von wenigen µm verschoben wird. Da am Schlitten 58 die Ultraschallschwingeinheit 3 befestigt ist, kann über den Schrittmotor 62 die Spalthöhe H verstellt werden. Weist die Spalthöhe H den gewünschten Wert auf, wird der Schrittmotor 62 angehalten, wodurch der Kniehebel 61 und der Schlitten 58 eine starre Position einnehmen. Die Übersetzung vom Schrittmotor 62 zur Spindel 63 und des Kniehebels 61 ist derart groß, daß keine zusätzliche Sperr-, Brems- oder Arretiermittel erforderlich sind.

Da die Leistungsabgabe des Ultraschallgenerators bei den unterschiedlichsten Materialien das Produkt aus Schweißamplitude, Anpreßkraft und der zu verschweißenden oder schneidenden Fläche ist, kann diese auf einfache Weise gemessen werden. Zur Auswertung der Schweiß- oder Schneidleistung verfügt der Generator über ein Leistungsmeßmodul, das zur Leistung analoge Spannungswerte ausgibt. Diese analogen Spannungswerte werden entsprechend der Leistungsabgaben des Generators von einer Regel- bzw. Steuereinheit als Regelgröße zur vollautomatischen Spaltregelung verwendet. Dabei wird beispielsweise der Leistung eines Generators (0 - 2000 W) eine analoge Spannung von z.B. 0 - 5 Volt zugeordnet. Bei einer z.B. notendigen Leistung von 1000 Watt beträgt die Spannung 2,5 Volt. Ist der Spalt zwischen Sonotrode und Gegenwerkzeug zu klein, erhöht sich die Schneid- oder Schweißkraft und der analoge Spannungswert steigt auf beispielsweise 3 Volt an. Diese Zunahme der Spannung wird erfaßt und entsprechend der Antrieb angesteuert, so daß der Spalt vergößert wird. Ist der Schneid- oder Schweißspalt zu groß, dann vermindert sich die Leistung und der Spannungswert nimmt ab, und dient als Signal, den Spalt zu verkleinern. Eine Berührung der Sonotrode mit der Gegenwalze wird bei dieser Ausführung der Spaltregelung durch Generatorleistung mit einer Sicherheitsabschaltung verhindert.

## Patentansprüche

1. Vorrichtung zum fortlaufenden Ultraschallbearbeiten einer Materialbahn (2) mittels einer eine Sonotrode (6) aufweisenden Ultraschallschwingeinheit (3) und einem starr mit dem Maschinenständer verbundenen Gegenwerkzeug (11), wobei die Materialbahn (2) durch einen Spalt zwischen dem Gegenwerkzeug (11) und der Ultraschallschwingeinheit (3) geführt und von der Ultraschallschwingeinheit (3) bearbeitet wird und die Ultraschallschwingeinheit (3) insbesondere einen Konverter und die mit diesem ggf. über ein Amplitudentransformationsstück verbundene Sonotrode (6) aufweist, wobei der Abstand der Ultraschallschwingeinheit (3) zum Gegenwerkzeug (11) über eine Verstelleinrichtung (19) einstellbar ist, **dadurch gekennzeichnet,** daß die Verstelleinrichtung (19) nach einem Einstellvorgang starr mit dem Maschinenständer verbindbar ist und daß die Ultraschallschwingeinheit (3) über die Verstelleinrichtung (19) starr im Maschinenständer angeordnet ist, woraus sich eine konstante Spalthöhe (H) ergibt, so daß bei unterschiedlicher Materialdicke während des Betriebs die Reaktionskräfte von der starren Lagerung vollständig abgestützt werden.

2. Vorrichtung nach Anspruch 1, dadurch gekennzeichnet, daß ein Schwingmodul (5) starr von einem Gehäuse (4) aufgenommen ist, wobei das Gehäuse (4) über die Verstelleinrichtung (19) starr am Maschinenständer gehaltert ist oder daß die Sonotrode (6) über die Verstelleinrichtung (19) starr am Maschinenständer befestigt ist oder daß das Amplitudentransformationsstück über die Verstelleinrichtung (19) starr am Maschinenständer angeordnet ist.

3. Vorrichtung nach einem der vorhergehenden Ansprüche, dadurch gekennzeichnet, daß der Spalt (13) zwischen der Sonotrode (6) und dem Gegenwerkzeug (11) über die Verstelleinrichtung (19) auf einen konstanten Wert einstellbar ist.

4. Vorrichtung nach einem der vorhergehenden Ansprüche, dadurch gekennzeichnet, daß die Ultraschallschwingeinheit (3) über eine temperaturgeführte Verstelleinrichtung (19) starr mit dem Maschinenständer verbunden ist.

5. Vorrichtung nach Anspruch 4, dadurch gekennzeichnet, daß die Verstelleinrichtung (19) von der Temperatur der Sonotrode (6), des Konverters, des Amplitudentransformators und/oder des Gegenwerkzeugs (11) angesteuert ist.

6. Vorrichtung nach Anspruch 4 oder 5, dadurch gekennzeichnet, daß ein die Temperatur (T) erfassender Sensor (30) vorgesehen ist, daß der Sensor (30) mit einer Steuereinrichtung (37) verbunden ist und daß die Steuereinrichtung (37) abhängig vom Signal (36) des Sensors (30) eine Änderung des Abstandes (A) der Halterung (18) zum Gegenwerkzeug (11) oder dessen Halterung bewirkt.

7. Vorrichtung nach einem der vorhergehenden Ansprüche, dadurch gekennzeichnet, daß ein die Spalthöhe (H) zwischen der Sonotrode (6) und dem Gegenwerkzeug (11) erfassender Sensor (30) vorgesehen ist, daß der Sensor (30) mit einer Steuer- oder Regeleinrichtung (37) verbunden ist und daß die Steuer- oder Regeleinrichtung (37) abhängig vom Signal (36) des Sensors (30) eine Änderung des Abstandes (A) einer Halterung (18) zum Gegenwerkzeug (11) oder dessen Halterung bewirkt.

8. Vorrichtung nach einem der Ansprüche 1 bis 3, dadurch gekennzeichnet, daß die Sonotrode (6) und das Gegenwerkzeug (11) elektrisch voneinander isoliert sind und daß ein einen elektrischen Wert, wie Strom, Spannung, Widerstand, erfassender Sensor vorgesehen ist, wobei der Sensor mit der Sonotrode (6) und dem Gegenwerkzeug (11) verbunden ist.

9. Vorrichtung nach einem der vorhergehenden Ansprüche, dadurch gekennzeichnet, daß die Verstelleinrichtung (19) ein aktives oder passives Element ist bzw. aktiv oder passiv ansteuerbar ist.

10. Vorrichtung nach Anspruch 6, 7 oder 8, dadurch gekennzeichnet, daß die Steuereinrichtung (27) direkt mit der Verstelleinrichtung (19) verbunden ist.

11. Vorrichtung nach einem der vorhergehenden Ansprüche, dadurch gekennzeichnet, daß die Steuereinrichtung (S) mit einem Zustellantrieb für die Sonotrode (6) verbunden ist.

12. Vorrichtung nach Anspruch 11, dadurch gekennzeichnet, daß über die Steuereinrichtung (S) die Zustellkraft im Zustellantrieb ansteuerbar ist.

13. Vorrichtung nach einem der Ansprüche 1 bis 10, dadurch gekennzeichnet, daß die Verstelleinrichtung (19) ein Piezoaktuator (20) ist.

14. Vorrichtung nach einem der vorhergehenden Ansprüche, dadurch gekennzeichnet, daß über die Steuereinrichtung (27) der Spalt (13) direkt oder indirekt veränderbar ist.

15. Vorrichtung nach einem der Ansprüche 6 bis 14, dadurch gekennzeichnet, daß der Sensor (30) im Knotenbereich oder im Bereich der Spitze (10) der Sonotrode (6) oder im Gegenwerkzeug (11) vorgesehen ist.

16. Vorrichtung nach Anspruch 6, 7 oder 8, dadurch gekennzeichnet, daß der Sensor (30) ein berührungsloser, insbesondere ein Wirbelstromsensor, Laser oder ein Infrarot-Sensor oder ein berührender Sensor ist.

17. Vorrichtung nach einem der vorhergehenden Ansprüche, dadurch gekennzeichnet, daß das Gegenwerkzeug (11) eine rotierende Walze (12) ist.

18. Vorrichtung nach einem der vorhergehenden Ansprüche, dadurch gekennzeichnet, daß die Verstelleinrichtung (11) verstellbar und arretierbar an der Ultraschallschwingeinheit (3) und/oder verstellbar und arretierbar am Maschinenständer befestigt ist.

19. Verfahren zur fortlaufenden Ultraschallbearbeitung einer Materialbahn mit einer Vorrichtung gemäß einem der vorhergehenden Ansprüche und einem Sensor gemäß Anspruch 8, dadurch gekennzeichnet, daß die Sonotrode (6) so weit in Richtung auf das Gegenwerkzeug (11) verstellt wird, bis sie das Gegenwerkzeug (11) berührt, wobei die Berührung von einem Sensor erfaßt wird, der die Zustellbewegung abbricht, und daß dann die Sonotrode (6) um die vorgegebene Spalthöhe H vom Gegenwerkzeug (11) entfernt wird und die Verstelleinrichtung (19) nach dem Einstellvorgang starr mit dem Maschinenständer verbunden wird, so daß die Ultraschallschwingeinheit (3) über die Verstelleinrichtung (19) starr im Maschinenständer angeordnet ist, woraus sich eine konstante Spalthöhe (H) ergibt, so daß bei unterschiedlicher Materialdicke während des Betriebs die Reaktionskräfte von der starren Lagerung vollständig abgestützt werden.

20. Verfahren nach Anspruch 19, dadurch gekennzeichnet, daß der Einstellvorgang in festen oder veränderbaren Zeitintervallen wiederholt wird.

21. Verfahren nach Anspruch 19 oder 20, dadurch gekennzeichnet, daß der Schneid- oder Schweißleistung des Generators ein analoger Spannungswert zugordnet wird und daß der analoge Spannungswert direkt oder indirekt zur Einstellung der Spalthöhe verwendet wird.

## Claims

1. Apparatus for the continuous ultrasonic processing of a web of material (2) by means of an ultrasonic vibrating unit (3) having a sonotrode (6), and a counterpart tool (11) rigidly connected to the machine frame structure, wherein the web of material (2) is passed through a gap between the counterpart tool (11) and the ultrasonic vibrating unit (3) and processed by the ultrasonic vibrating unit (3) and the ultrasonic vibrating unit (3) has in particular a converter and the sonotrode (6) which is connected thereto optionally by way of an amplitude transformation portion, wherein the spacing of the ultrasonic vibrating unit (3) relative to the counterpart tool (11) is adjustable by way of a displacement device (19), characterised in that after an adjustment operation the displacement device (19) can be rigidly connected to the machine frame structure and that the ultrasonic vibrating unit (3) is arranged rigidly in the machine frame structure by way of the displacement device (19), thereby affording a constant gap height (H) so that when dealing with different material thicknesses during operation the reaction forces are completely carried by the rigid mounting means.

2. Apparatus according to claim 1 characterised in that a vibrating module (5) is rigidly carried by a housing (4), wherein the housing (4) is rigidly mounted to the machine frame structure by way of the displacement device (19) or that the sonotrode (6) is rigidly fixed to the machine frame structure by way of the displacement device (19) or that the amplitude transformation portion is rigidly arranged on the machine frame structure by way of the displacement device (19).

3. Apparatus according to one of the preceding claims characterised in that the gap (13) between the sonotrode (6) and the counterpart tool (11) is adjustable to a constant value by way of the displacement device (19).

4. Apparatus according to one of the preceding claims characterised in that the ultrasonic vibrating unit (3) is rigidly connected to the machine frame structure by way of a temperature-controlled displacement device (19).

5. Apparatus according to claim 4 characterised in that the displacement device (19) is actuated by the temperature of the sonotrode (6), the converter, the amplitude transformer and/or the counterpart tool (11).

6. Apparatus according to claim 4 or claim 5 characterised in that there is provided a sensor (30) for detecting the temperature (T), that the sensor (30) is connected to a control device (S), and that the control device (S) causes a change in the spacing (A) of the holder (18) relative to the counterpart tool (11) or its holder in dependence on the signal (36) from the sensor (30).

7. Apparatus according to one of the preceding claims characterised in that there is provided a sensor (30) for detecting the gap height (H) between the sonotrode (6) and the counterpart tool (11), that the sensor (30) is connected to a control or regulating device (S), and that the control or regulating device (S) produces a change in the spacing (A) of a holder (18) relative to the counterpart tool (11) or its holder in dependence on the signal (36) from the sensor (30).

8. Apparatus according to one of claims 1 to 3 characterised in that the sonotrode (6) and the counterpart tool (11) are electrically insulated from each other and that there is provided a sensor for detecting an electrical value such as current, voltage, resistance, the sensor being connected to the sonotrode (6) and the counterpart tool (11).

9. Apparatus according to one of the preceding claims characterised in that the displacement device (19) is an active or passive element and is actively or passively actuable respectively.

10. Apparatus according to claim 6, claim 7 or claim 8 characterised in that the control device (S) is directly connected to the displacement device (19).

11. Apparatus according to one of the preceding claims characterised in that the control device (S) is connected to a feed drive for the sonotrode (6).

12. Apparatus according to claim 11 characterised in that the feed force in the feed drive is actuable by way of the control device (S).

13. Apparatus according to one of claims 1 to 10 characterised in that the displacement device (19) is a piezoelectric actuator (20).

14. Apparatus according to one of the preceding claims characterised in that the gap (13) is directly or indirectly variable by way of the control device (S).

15. Apparatus according to one of claims 6 to 14 characterised in that the sensor (30) is provided in the node region or in the region of the tip (10) of the sonotrode (6) or in the counterpart tool (11).

16. Apparatus according to claim 6, claim 7 or claim 8 characterised in that the sensor (30) is a contact-less sensor, in particular an eddy current sensor, laser or an infra-red sensor, or a contact sensor.

17. Apparatus according to one of the preceding claims characterised in that the counterpart tool (11) is a rotating drum (12).

18. Apparatus according to one of the preceding claims characterised in that the displacement device (19) is secured displaceably and arrestably to the ultrasonic vibrating unit (3) and/or displaceably and arrestably to the machine frame structure.

19. A process for continuous ultrasonic processing of a web of material with an apparatus according to one of the preceding claims and a sensor according to claim 8, characterised in that the sonotrode (6) is displaced so far towards the counterpart tool (11) until it touches the counterpart tool (11), contact being detected by a sensor which breaks off the feed movement, and that then the sonotrode (6) is moved away from the counterpart tool (11) by the predetermined gap height (H) and the displacement device (19), after the adjustment operation, is rigidly connected to the machine frame structure so that the ultrasonic vibrating unit (3) is arranged in the machine frame structure rigidly by way of the displacement device (19), thereby affording a constant gap height (H) so that when dealing with different material thicknesses during operation the reaction forces are completely carried by the rigid mounting means.

20. A process according to claim 19 characterised in that the adjustment operation is repeated at fixed or variable time intervals.

21. A process according to claim 19 or claim 20 characterised in that an analog voltage value is associated with the cutting or welding output of the generator and that the analog voltage value is used directly or indirectly for adjusting the gap height.

## Revendications

1. Dispositif d'usinage continu par ultrasons d'une bande de matière (2) à l'aide d'un émetteur d'ultrasons (3) équipé d'une sonotrode (6) et d'un contre-outil (11) solidaire du montant de machine, la bande de matière (2) passant dans l'interstice entre le contre-outil (11) et l'émetteur d'ultrasons (3) en étant usinée par l'émetteur d'ultrasons (3), l'émetteur d'ultrasons (3) présentant notamment un convertisseur ainsi que la sonotrode (6) éventuellement reliée à celui-ci par un organe de transformation d'amplitude, la distance entre l'émetteur d'ultrasons (3) et le contre-outil (11) étant ajustable par un moyen de réglage (19), caractérisé en ce que le moyen de réglage (19), après une opération de réglage, peut être relié fixement au montant de machine et en ce que l'émetteur d'ultrasons (3) est disposé fixement, par le biais du moyen de réglage (19), à l'intérieur du montant de machine, permettant ainsi d'obtenir une hauteur d'interstice (H) constante, de telle sorte qu'en cas de différences d'épaisseur de matière, en cours de fonctionnement, les forces de réaction sont supportées complètement par l'appui fixe.

2. Dispositif selon la revendication 1, caractérisé en ce qu'un carter (4) reçoit fixement un module oscillant (5), le carter (4) étant maintenu fixement sur le montant de machine par le biais du moyen de réglage (19), ou en ce que la sonotrode (6) est fixée au montant de machine par le biais du moyen de réglage (19), ou en ce que l'organe de transformation d'amplitude est agencé fixement sur le montant de machine par le biais du moyen de réglage (19).

3. Dispositif selon l'une quelconque des revendications précédentes, caractérisé en ce que l'interstice (13) entre la sonotrode (6) et le contre-outil (11) peut être réglé à une valeur constante par le biais du moyen de réglage (19).

4. Dispositif selon l'une quelconque des revendications précédentes, caractérisé en ce que l'émetteur d'ultrasons (3) est relié fixement au montant de machine par le biais d'un moyen de réglage (19) asservi à la température.

5. Dispositif selon la revendication 4, caractérisé en ce que le moyen de réglage (19) est commandé par la température de la sonotrode (6), du convertisseur, du transformateur d'amplitude et/ou du contre-outil (11).

6. Dispositif selon la revendication 4 ou 5, caractérisé en ce qu'il est prévu un capteur (30) mesurant la température (T), en ce que ce capteur (30) est associé à un moyen de commande (37) et en ce que ce moyen de commande (37) provoque, en réponse au signal (36) du capteur (30), une variation de la distance (A) entre le support (18) et le contre-outil (11) ou son support.

7. Dispositif selon l'une quelconque des revendications précédentes, caractérisé en ce qu'il est prévu un capteur (30) mesurant la hauteur d'interstice (H) entre la sonotrode (6) et le contre-outil (11), en ce que ce capteur (30) est associé à un moyen de commande ou de régulation (37) et en ce que ce moyen de commande ou de régulation (37) provoque, en réponse au signal (36) du capteur (30), une variation de la distance (A) entre un support (18) et le contre-outil (11) ou son support.

8. Dispositif selon l'une quelconque des revendications 1 à 3, caractérisé en ce que la sonotrode (6) et le contre-outil (11) sont isolés électriquement l'un de l'autre et en ce qu'il est prévu un capteur mesurant une valeur électrique telle que l'intensité, la tension ou la résistance, le capteur étant en liaison avec la sonotrode (6) et le contre-outil (11).

9. Dispositif selon l'une quelconque des revendications précédentes, caractérisé en ce que le moyen de réglage (19) est un élément actif ou passif ou peut être commandé de manière active ou passive.

10. Dispositif selon la revendication 6, 7 ou 8, caractérisé en ce que le moyen de commande (27) est associé directement au moyen de réglage (19).

11. Dispositif selon l'une quelconque des revendications précédentes, caractérisé en ce que le moyen de commande (S) est associé à un entraînement d'approche pour la sonotrode (6).

12. Dispositif selon la revendication 11, caractérisé en ce que la force d'approche de l'entraînement d'approche peut être commandée par le moyen de commande (S).

13. Dispositif selon l'une quelconque des revendications 1 à 10, caractérisé en ce que le moyen de réglage (19) est un actionneur piézo-électrique (20).

14. Dispositif selon l'une quelconque des revendications précédentes, caractérisé en ce que l'interstice (13) peut être modifié directement ou indirectement par le moyen de commande (27).

15. Dispositif selon l'une quelconque des revendications 6 à 14, caractérisé en ce que le capteur (30) est prévu dans la zone nodale ou au niveau de la pointe (10) de la sonotrode (6) ou dans le contre-outil (11).

16. Dispositif selon la revendication 6, 7 ou 8, caractérisé en ce que le capteur (30) est un capteur sans contact, notamment un capteur à courants de Foucault, un capteur laser ou infrarouge ou un capteur de contact.

17. Dispositif selon l'une quelconque des revendications précédentes, caractérisé en ce que le contre-outil (11) est un cylindre en rotation (12).

18. Dispositif selon l'une quelconque des revendications précédentes, caractérisé en ce que le moyen de réglage (11) est fixé sur l'émetteur d'ultrasons (3) avec capacité de réglage et de blocage et/ou sur le montant de machine avec capacité de réglage et de blocage.

19. Procédé d'usinage continu par ultrasons d'une bande de matière avec un dispositif selon l'une des revendications précédentes et avec un capteur selon la revendication 6, caractérisé en ce que la sonotrode (6) se déplace en direction du contre-outil (11) jusqu'à toucher celui-ci, ce contact étant détecté par un capteur qui arrête le mouvement d'approche, et en ce que la sonotrode (6) s'écarte alors du contre-outil (11) d'une valeur correspondant à la hauteur d'interstice donnée (H), et en ce que le moyen de réglage (19), après l'opération de réglage, est relié fixement au montant de machine, de telle sorte que l'émetteur d'ultrasons (3) est disposé de manière rigide dans le montant de machine par le biais du moyen de réglage (19), permettant ainsi d'obtenir une hauteur d'interstice (H) constante, de telle sorte qu'en cas de différences d'épaisseur de matière, en cours de fonctionnement, les forces de réaction sont supportées complètement par l'appui fixe.

20. Procédé selon la revendication 19, caractérisé en ce que l'opération de réglage se renouvelle à des intervalles de temps fixes ou variables.

21. Procédé selon la revendication 19 ou 20, caractérisé en ce qu'à la puissance de coupe ou de soudure du générateur est attribuée une valeur de tension analogique et en ce que la valeur de tension analogique est utilisée directement ou indirectement pour le réglage de la hauteur d'interstice.
